# EUROPEAN PATENT SPECIFICATION

(11) **EP 3 830 665 B1**
(45) Date of publication and mention of the grant of the patent: **20.07.2022**
(21) Application number: 19756003.0
(22) Date of filing: 26.07.2019
(51) Int. Cl.: G05D 16/16

(54) **GAS PRESSURE CONTROLLER, VALVE ASSEMBLY AND METHOD OF ASSEMBLING A GAS PRESSURE CONTROLLER**
GASDRUCKREGLER, VENTILANORDNUNG UND VERFAHREN ZUR MONTAGE EINES GASDRUCKREGLERS
RÉGULATEUR DE PRESSION DE GAZ, ENSEMBLE SOUPAPE ET PROCÉDÉ D'ASSEMBLAGE D'UN RÉGULATEUR DE PRESSION DE GAZ

(30) Priority: 27.07.2018 NL 2021402; 17.10.2018 EP 18201043
(43) Date of publication of application: 09.06.2021
(73) Proprietor: Wigersma en Sikkema B.V., 6983 BP Doesburg (NL)
(72) Inventor: VAN SEIJST, Hielke Marten, 6903 WP Zevenaar (NL)
(74) Representative: Arnold & Siedsma
(86) International application number: PCT/NL2019/050497
(87) International publication number: WO 2020/022904

(56) References cited:
- DE-A1-102013 001 979
- DE-B- 1 039 332
- US-A1- 2013 000 756

## Description

The invention relates to a gas pressure controller comprising a controller housing with an inflow opening and an outflow opening, a membrane, a valve assembly placed between the inflow opening and the outflow opening and comprising a valve seat and a closing mechanism movable relative thereto for adjusting and/or closing an effective throughflow opening from the inflow opening to the outflow opening, and a control shaft which is connected to one of the closing mechanism and the valve seat and which connects the one of the closing mechanism and the valve seat to the membrane, wherein the membrane is configured to further open and/or close the valve via the control shaft subject to the gas pressure on the membrane.

Such a gas pressure controller is per se known. In order to prevent leakage the closing mechanism must be properly aligned relative to the valve seat. In the known gas pressure controller the valve seat is formed as a part of the controller housing. The closing mechanism must therefore be precisely positioned relative to the valve seat, and so relative to the controller housing, during assembly of the gas pressure controller. Because of the precision required this is a time-consuming process.

DE 10 2013 001979 A1 discloses a gas pressure controller according to the preamble of claim 1.

The invention has for its object to at least partially solve, or at least partially prevent, the above stated problem. In addition or alternatively, the invention has for its object to enable simple mounting of the valve assembly.

This object is achieved with a gas pressure controller according to the preamble wherein the valve assembly as a whole is releasably connectable to the controller housing and the membrane.

Because the valve assembly is releasably connectable as a whole to the controller housing, the closing mechanism and the valve seat can be placed simultaneously in the controller housing. It is hereby possible to have alignment of the closing mechanism and the valve seat take place for instance outside the controller housing, whereby this can take place more quickly, more easily and/or more accurately.

Such a gas pressure controller can provide the further advantage that the valve assembly can be easily replaced without the controller housing and/or the membrane having to be replaced. When the valve assembly is replaced in its entirety, no or fewer precise mounting operations need be carried out than in the case where the valve seat forms part of the controller housing. Maintenance of a gas pressure controller hereby becomes quicker and easier. This is particularly important when the maintenance has to take place at a location where the gas pressure controller is mounted, such as a gas extraction plant, since the conditions and/or tools there often usually make accurate placing of the closing mechanism more difficult.

As stated above, the valve assembly comprises both the closing mechanism and the valve seat. Together, they thus form part of the same whole. A correct operation of the closing mechanism with the valve seat, for instance the combination of closing mechanism and valve seat not leaking, can thereby be checked before the valve assembly is placed in the controller housing. This is because, according to the invention, the correct operation of the closing mechanism and the valve seat is not affected during placing of the valve assembly in the controller housing, precisely because the closing mechanism and the valve seat form an integral part of the valve assembly, which is placed in the controller housing as a whole.

Valve assemblies with a differing valve diameter can in particular be interchangeable in the same controller housing. This ensures that, following installation, gas pressure controllers can be adapted relatively easily to a higher or lower desired capacity. Because both the valve and the seat form part of the valve assembly, changing the capacity of the controller can be achieved in relatively simple manner by placing a valve assembly with an altered closing mechanism diameter and valve seat diameter. It is thus possible to apply different closing mechanism diameters and valve seat diameters for valve assemblies having the same outer dimensions, whereby valve assemblies with different closing mechanism diameters and valve seat diameters are mutually interchangeable.

The membrane is also referred to in practice as a 'plane membrane' despite the fact that the membrane need not be completely flat and can move and/or deform out of the plane.

The same controller housing and/or the membrane and/or the membrane housing can optionally be suitably embodied for different types of valve assembly which can for instance have a different cross-sectional dimension of the closing mechanism and the valve seat.

During use a gas pressure prevails on one side of the membrane which can correspond to the controlled gas pressure at the outflow opening of the controller housing. A space around the membrane can for this purpose be connected gas-permeably to the outflow opening. A regulating gas pressure prevails on the other side during use. When the controlled gas pressure deviates from a regulating gas pressure, the deviation hereby also acts on the membrane which, through deformation, transfers the deviation via the control shaft to the closing mechanism or the valve seat, whereby it is possible to compensate for the deviation. Because the operation of such a membrane is known to the skilled person, it is not further elucidated here.

It is noted that the components of the valve assembly, and particularly both the valve seat and the closing mechanism, can form an integral part of the valve assembly, whereby they are not releasable from each other or other components of the valve assembly.

In an embodiment of the gas pressure controller according to the invention the valve assembly can be inserted at least partially into the controller housing through an opening intended for the purpose in the controller housing.

Insertion of the valve assembly into the controller housing through the opening is a relatively simple manner of mounting the valve assembly.

The controller housing can be provided with a stop against which the valve assembly lies with a flange during use when the valve assembly is correctly positioned relative to the controller housing.

The valve assembly is attached particularly with threaded ends and/or bolts and/or nuts or similar fastening means to the controller housing. The controller housing can for this purpose be provided with a upright threaded ends corresponding to openings arranged in a flange of the valve assembly, onto which threaded ends nuts can be arranged in order to attach the valve assembly via the flange. Similar attachment techniques can also be used, such as blind holes in the controller housing which are provided with screw thread into which bolts can be inserted through a flange of the valve assembly in order to attach the valve assembly to the controller housing.

In another embodiment of the gas pressure controller according to the invention the membrane is placed in a membrane housing, and the membrane housing comprises at least one opening for passage of the valve assembly.

Because of the opening in the membrane housing the valve assembly can be arranged via the membrane housing in the controller housing. In particular the opening of the membrane housing is therefore aligned with the opening in the controller housing. This embodiment provides for an exceptionally compact construction.

In yet another embodiment of the gas pressure controller according to the invention the membrane and the membrane housing are connectable in at least partially releasable manner to the controller housing in order to leave the opening in the membrane housing clear for passage of the valve assembly.

When the membrane housing is embodied in this way the valve assembly can be arranged or removed by releasing the membrane housing, at least partially, and the membrane. The same membrane can then be used together with a new valve assembly, even if this valve assembly has a different diameter.

The membrane housing can particularly consist of two shells between which the membrane extends. A first of the two shells of the membrane housing can comprise the opening for passage of the valve assembly. This first shell need not be releasably connectable to the controller housing, although this is possible. The first shell is particularly provided with through-holes which in use are aligned with the holes in the flange of the valve assembly, so that the first shell can be attached together with the valve assembly to the controller housing by means of the same threaded ends and/or bolts and/or nuts.

A second shell of the membrane housing and the membrane can be releasably connectable to the first shell. Before placing and/or removal of the valve assembly the second shell and the membrane can be released, after which the valve assembly can be inserted and/or withdrawn through the opening in the controller housing and the opening in the membrane housing.

In yet another embodiment of the gas pressure controller according to the invention the control shaft and the other of the closing mechanism and the valve seat are provided with mutually co-acting connecting members which are releasable from each other for releasably connecting the control shaft and the other of the closing mechanism and the valve seat to each other.

By means of the mutually co-acting connecting members which are releasable from each other the valve seat and the closing mechanism can be temporarily connected to each other via the control shaft. This temporary connection can be used during insertion of the valve assembly into the controller housing and/or the removal of the valve assembly from the controller housing. Because the valve seat and the closing mechanism are connected to each other during these movements of the valve assembly, the valve seat and the closing mechanism are prevented from knocking against each other, whereby they could be damaged.

In yet another embodiment of the gas pressure controller according to the invention the mutually co-acting connecting members are formed by engaging openings in the control shaft and at least one wall which is connected to the other of the closing mechanism and the valve seat and which extends along the control shaft from the other of the closing mechanism and the valve seat; and by a locking shaft which is releasably arrangeable in the engaging openings to connect the control shaft and the other of the closing mechanism and the valve seat releasably to each other. One engaging opening can be arranged in the control shaft, and for instance one or two engaging openings in the wall.

The locking shaft can be arranged relatively easily in the engaging openings and/or removed therefrom.

In yet another embodiment of the gas pressure controller according to the invention the engaging openings are formed by through-holes into which the locking shaft is slidable and/or screwable.

Because the engaging openings are through-holes, the locking shaft can be inserted from outside one side through the wall and through the control shaft and be removed in the reverse direction. The locking shaft hereby is and remains accessible from outside the wall for release thereof.

In yet another embodiment of the gas pressure controller according to the invention the at least one wall is provided with two engaging openings lying opposite each other relative to the control shaft.

Because of the two opposite engaging openings the locking shaft can pass through the control shaft and engage at two locations on the wall. This results in an exceptionally sturdy connection.

In yet another embodiment of the gas pressure controller according to the invention the controller housing comprises at least one hole through which the locking shaft is at least partially removable in order to release the connecting members when the valve assembly is connected to the controller housing.

The hole can later be closed or used as connecting point for a gas conduit.

Because of the at least one hole the locking shaft can be removed after the valve assembly has been arranged and fixed in the desired position or before the valve assembly is removed. This prevents the closing mechanism and the valve seat being able to move relative to each other before the valve assembly has been attached, which could result in misplacing of the closing mechanism relative to the valve seat.

Two mutually opposite holes can particularly be provided in the controller housing so that a tool can be inserted through one hole in order to push the locking shaft away through the other hole.

In yet another embodiment of the gas pressure controller according to the invention the locking shaft has in its length direction a first segment with a first cross-section and a second segment with a second cross-section, wherein the dimensions of the cross-section of the second segment correspond to the engaging opening in the control shaft and the dimensions of the cross-section of the first segment are smaller than the dimensions of the cross-section of the second segment.

Because the dimensions of the cross-section of the second segment correspond to the engaging opening in the control shaft, the control shaft can be clamped without or with little play onto the locking shaft. Because the dimensions of the cross-section of the second segment are smaller, the locking shaft can be moved easily through the opening when the second segment passes through the engaging opening in the control shaft. This prevents the locking shaft having to be inserted along its full length through the engaging opening of the control shaft counter to a friction force of the control shaft. Said friction force occurs instead only when at least a portion of the length of the second segment passes through the engaging opening of the control shaft.

In yet another embodiment of the gas pressure controller according to the invention the control shaft is connected to the closing mechanism.

The valve seat can hereby define an opening which the closing mechanism can close, and the control shaft can pass through the opening. This has the advantage that the control shaft can be given a relatively simple form.

In yet another embodiment of the gas pressure controller according to the invention the valve assembly further comprises a piston which is connected to the control shaft and which, when the valve assembly is connected to the controller housing, is situated on the other side of the inflow opening than the closing mechanism.

Because the piston is situated on the other side of the inflow opening than the closing mechanism, the gas pressure at the inflow opening exerts on the piston a force which is roughly equal, though in opposite direction, to that on the closing mechanism. The force on the piston and the closing mechanism caused by the gas pressure of the inflow opening thus counteract each other and at least partially cancel each other out. The closing mechanism is hereby not opened, or less so, irrespective of the pressure at the inflow opening. Particularly when the surface areas against which the gas exerts pressure on the piston and the closing mechanism are approximately equal, the resultant force on the control shaft is substantially zero. The valve assembly hereby does not leak, or less so, because the pressure at the inflow opening cannot press the valve assembly open.

In yet another embodiment of the gas pressure controller according to the invention the piston is connected to the valve seat for movement via a rolling membrane relative to the valve seat.

The rolling membrane can provide for a movable seal between the piston and the valve seat so as to allow the desired movement of the piston, and so the control shaft and the closing mechanism, relative to the valve seat without counteracting this movement with too great an elastic force. The resultant force on the control shaft (due to the gas pressure on the closing mechanism and the piston) is hereby still small or approximately zero.

The rolling membrane is particularly a tubular deformable element disposed round and coaxially with the control shaft. The rolling membrane is configured to roll up or unroll at least partially in its length direction when the piston, control shaft and closing mechanism move in the length direction of the control shaft relative to the valve seat.

Connection of the valve seat and the closing mechanism prior to arranging of the valve assembly in the controller housing is particularly advantageous when a rolling membrane is used because in this way the closing mechanism and the valve seat cannot move relative to each other, in particular rotate about the length direction of the control shaft, during arranging of the valve assembly. Such movements could damage, deform, fold double or kink the rolling membrane, whereby the rolling membrane would then function less well.

The valve seat of the gas pressure controller can have a first internal valve diameter and the valve assembly can have an external diameter corresponding to a diameter of the opening in the controller housing. A second valve assembly can here further be provided as replacement for the valve assembly, wherein the external diameter of the second valve assembly can also correspond to the diameter of the opening in the controller housing and wherein the second valve assembly can comprise a valve seat with a second internal valve diameter which differs from the first internal valve diameter. The capacity of the gas pressure controller can thus be adjusted in simple and rapid manner by replacing a valve assembly with a valve assembly having the same outer diameter but a different inner diameter.

The invention also relates to a valve assembly suitable and intended for use in a gas pressure controller as specified above.

The valve assembly can for this purpose have all the above stated features and provide all the associated advantages in any random suitable combination.

The invention also relates to a method for assembling a gas pressure controller, for instance according to any one of the foregoing claims, comprising the steps of:
a) providing a controller housing having an inflow opening and an outflow opening;
b) installing a valve assembly as a whole releasably between the inflow opening and the outflow opening, which valve assembly comprises:
   - a valve seat and a closing mechanism movable relative thereto for adjusting and/or closing an effective throughflow opening from the inflow opening to the outflow opening; and
   - a control shaft connected to one of the closing mechanism and the valve seat; and
c) connecting the control shaft releasably to a membrane,
wherein the membrane further opens and/or closes the valve assembly via the control shaft subject to the gas pressure on the membrane.

When the valve assembly is releasably installed as a whole, the closing mechanism and the valve seat can be placed simultaneously in the controller housing. This can provide the advantages as specified above.

The method can be performed with a gas pressure controller as specified above with any random suitable combination of features and the associated advantages.

Step b) takes place particularly by inserting the valve assembly at least partially through an opening intended therefor into the controller housing.

The valve assembly is still more particularly inserted into the membrane housing at least partially through an opening for passage of the valve assembly

In an embodiment of the method according to the invention the other of the closing mechanism and the valve seat is releasably connected to the control shaft prior to step b), and optionally released after step c).

This embodiment provides the advantage that the valve seat and the closing mechanism are connected to each other outside the controller housing. Alignment of these two can hereby take place accurately, easily and/or quickly. During arranging of the valve assembly the aligned components can no longer move relative to each other because of the connection. By releasing the valve seat and the closing mechanism from each other following arrangement of the valve assembly, the valve assembly can open and close in order to regulate the gas pressure.

The invention also relates to a method for replacing a valve assembly in a gas pressure controller according to the invention, comprising the steps of:
d) releasing the valve assembly from the controller housing, optionally after releasing the membrane and at least a part of the membrane housing from the controller housing; and
e) assembling the gas pressure controller with another valve assembly in the described manner.

The valve assembly and/or the gas pressure controller in the above stated methods can provide all the above stated features and all the associated advantages in any random suitable combination.

The other of the valve seat and the closing mechanism is optionally connected to the control shaft prior to step d).

The invention will be further elucidated with reference to the accompanying figures, in which:
Figure 1 is a side view of a gas pressure controller according to the invention;
Figures 2A and 2B show a section of a controller housing and a membrane housing of the gas pressure controller of figure 1, each with a valve assembly with a valve of a differing diameter;
Figure 3A is a perspective view of a valve assembly according to the invention wherein the valve seat is connected to the control shaft;
Figure 3B shows a section of the valve assembly of figure 3A;
Figure 4A is a perspective view of the valve assembly of figures 3A and 3B wherein the valve seat and the control shaft are released from each other;
Figure 4B shows a section of the valve assembly of figures 3A-4A;
Figure 5 is a perspective view of the control shaft and the closing mechanism of the valve assembly of figures 3A-4B;
Figure 6 is a side view of a locking shaft for use in the valve assembly of figures 3A-4B;
Figure 7 shows schematically a method of assembly according to the invention; and
Figure 8 shows schematically a method for replacing a valve assembly according to the invention.

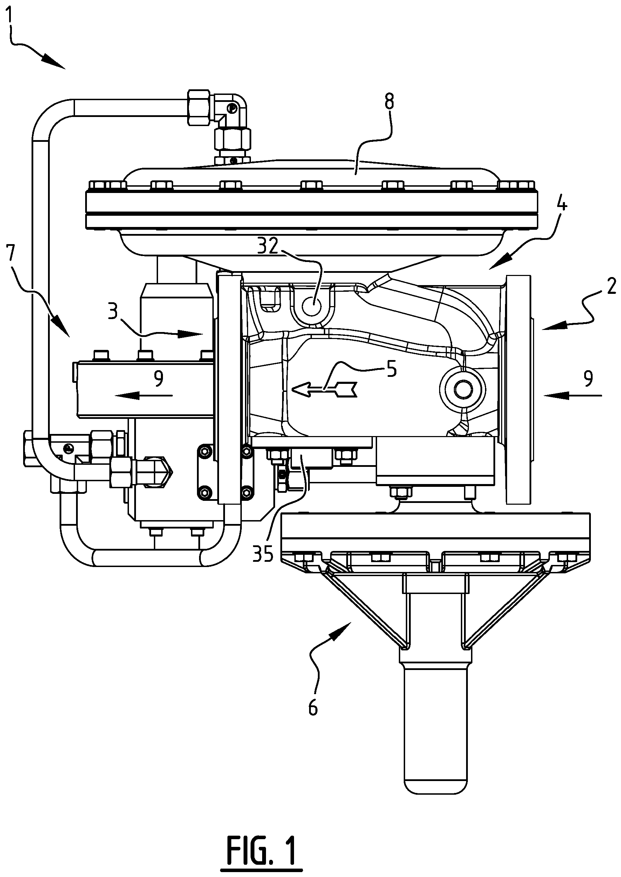

The same elements are designated in the figures with the same reference numerals. Figure 1 shows a gas pressure controller 1 with an inflow opening 2 and an outflow opening 3. The gas pressure controller has a controller housing 4 on which the flow direction 9 of gas from inflow opening 2 to outflow opening 3 is indicated with an arrow 5 arranged permanently on controller housing 4. Gas pressure controller 1 is provided in known manner with a cut-off valve 6 and is connected to a regulating pressure controller 7. A membrane housing 8 is also visible in figure 1.

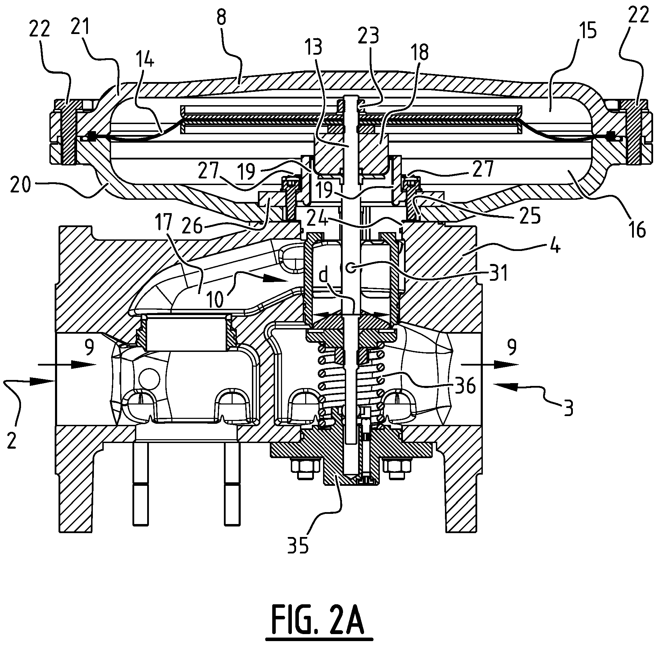

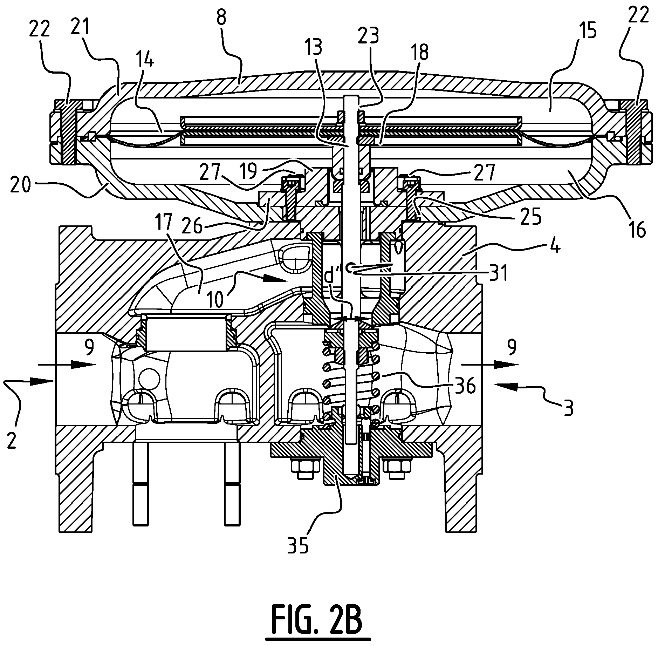

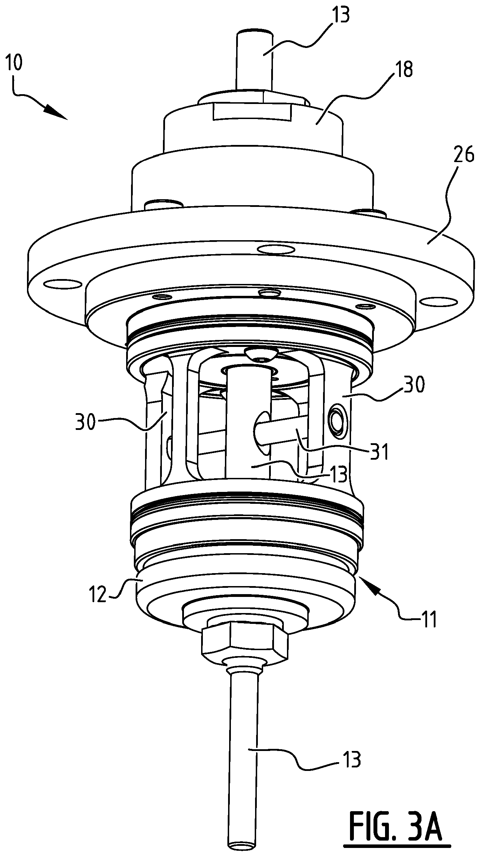

In the cross sections of figures 2A and 2B the flow direction through controller housing 4 from inflow opening 2 to outflow opening 3 is indicated with arrows 9. In figures 2A and 2B the gas pressure controller is shown from a different angle than in figure 1, whereby the flow direction of gas through gas pressure controller 1 is reversed in the figure. A valve assembly 10 is arranged between inflow opening 2 and outflow opening 3. Such a valve assembly 10 is shown in more detail in figures 3A-4B.

Figures 2A and 2B differ in that the diameter d, d' of valve assemblies 10 differs. Gas pressure controllers 1 of figures 2A and 2B are otherwise the same. Gas pressure controller 1 of for instance figure 2A can in this way be adapted to a lower desired capacity by integrally replacing valve assembly 10 with valve diameter d by a valve assembly 10 with a smaller valve diameter d' as shown in figure 2B. Gas pressure controller 1 of figure 2B can likewise be adapted to a higher desired capacity by arranging a valve assembly 10 with a greater valve diameter d.

Valve assembly 10 comprises a valve seat 11 and a closing mechanism 12 therefor. Valve seat 11 and closing mechanism 12 can move relative to each other in order to enlarge, decrease or close an effective throughflow opening from inflow opening 2 to outflow opening 3. The gas pressure at outflow opening 3 can hereby be regulated by enlarging or decreasing the effective throughflow opening. Closing mechanism 12 and valve seat 11 are biased toward each other by means of spring 36 (see figure 2). Valve assembly 10 further comprises a control shaft 13 which is in this case connected to closing mechanism 12. In other embodiments the control shaft could be connected to valve seat 11 instead of to closing mechanism 12. In the embodiment shown in the figures control shaft 13 connects closing mechanism 12 to a membrane 14. Membrane 14 separates in known manner a first chamber 15 where a regulating pressure prevails and a second chamber 16 where the outlet pressure to be regulated prevails. Membrane 14 is deformed by differences in the regulating pressure and the outlet pressure, whereby control shaft 13 displaces closing mechanism 12 in the direction of or away from valve seat 11. The effective throughflow opening hereby becomes larger and the outlet pressure changes. A piston 18 is mounted on control shaft 13 relative to inflow channel 17 on the other side thereof than closing mechanism 12. The gas pressure in inflow channel 17 hereby presses on closing mechanism 12 and, in an opposite direction, on piston 18. Because the surface areas of piston 18 and closing mechanism 12 on which the pressure acts are approximately equal in the figures, the resultant force on control shaft 13 by the gas pressure in inflow channel 17 is roughly zero. The piston is connected by a rolling membrane 19 to valve seat 11 for movement relative to valve seat 11 in the length direction of control shaft 13. Rolling membrane 19 is substantially tubular and disposed coaxially with control shaft 13. Rolling membrane 19 closes second chamber 16 to gas from inflow channel 17. Because rolling membrane 19 can roll up and unroll in its length direction, piston 18 (and so control shaft 13 and closing mechanism 12) can move relative to valve seat 11.

According to the invention valve assembly 10 is releasably connectable to controller housing 4 and membrane 14. Membrane 14 is in this case received between a first shell 20 and a second shell 21 which together form the membrane housing 8. Second shell 21 is releasably connectable to first shell 20, in this example by fastening means formed by bolts 22. When second shell 21 is released from first shell 20, membrane 14 can also be released. Membrane 14 can optionally be releasably connectable to the control shaft by means of a nut 23. When membrane 14 is also released, valve assembly 10 can be taken out of controller housing 4 by sliding valve assembly through an opening 24 in controller housing 4 and an opening 25 in membrane housing 8. In the shown embodiment the valve assembly has a flange 26 which is releasably connectable to controller housing 4 by screwing nuts onto threaded ends 27. Valve assembly 10 is hereby thus releasably connectable to both controller housing 4 and membrane housing 8. This has the advantage that valve assembly 10 can be placed in a simple manner in controller housing 4 or removed therefrom without damage being caused to valve seat 11, closing mechanism 12 or other parts of valve assembly 10 or controller housing 4. It is hereby also relatively simple to replace a valve assembly 10 with a first valve diameter by a valve assembly 10 with a second, different valve diameter. Controller housing 4 need not be replaced or modified for this purpose.

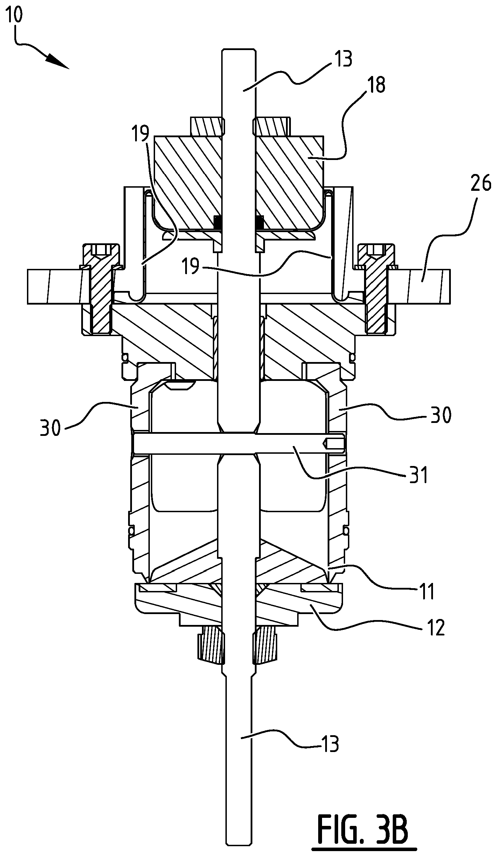

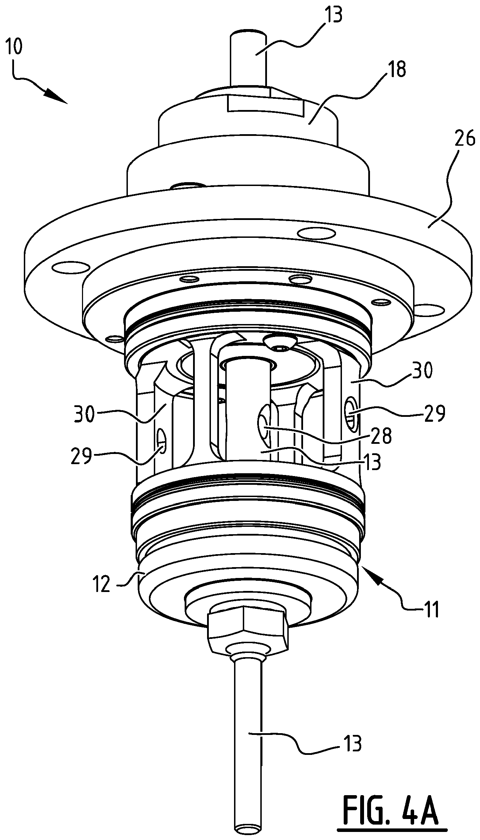

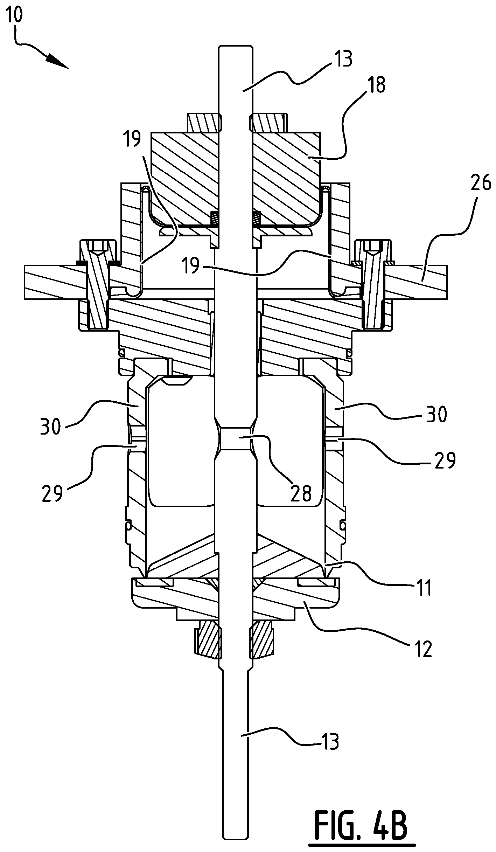

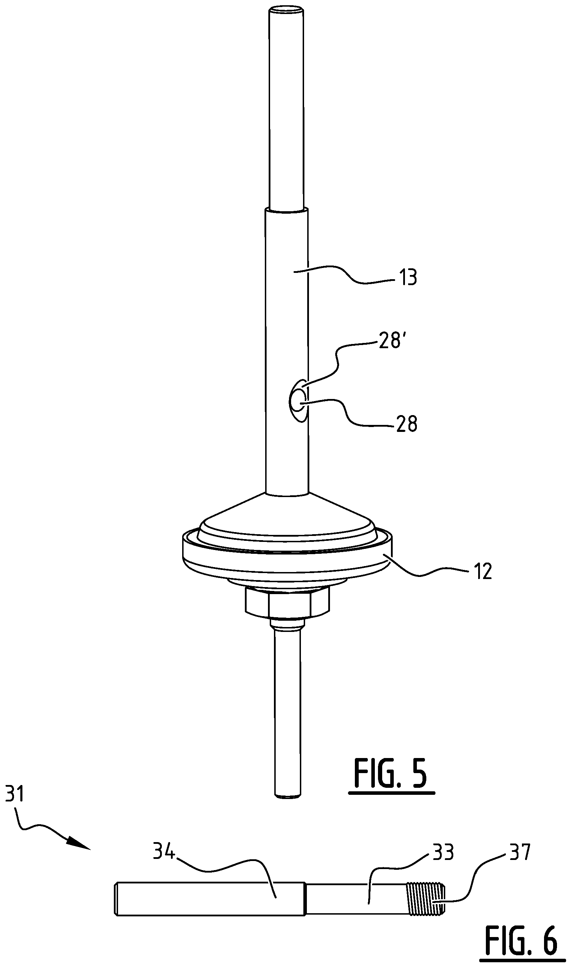

As shown in figures 3A-4B, control shaft 13 and closing mechanism 12 are provided in this example with mutually co-acting connecting members which are releasable from each other and which are formed by engaging openings 28, 29 in control shaft 13 and in a wall 30 extending along control shaft 13 from valve seat 11, and by a locking shaft 31. In figures 3A and 3B control shaft 31 is arranged in engaging openings 28, 29 so as to connect valve seat 11 to control shaft 13 and closing mechanism 12 via wall 30. Closing mechanism 12 can hereby not move relative to valve seat 11 when locking shaft 31 has been arranged. For insertion and/or removal of valve assembly 10 into or out of controller housing 4 locking shaft 31 can be arranged so that closing mechanism 12 and valve seat 11 cannot move relative to each other during the insertion or removal, whereby damage can be prevented and the insertion or removal can take place more quickly and more easily. Both the opening 28 in control shaft 13 and the opening in wall 30 are in this case through-holes (see figure 5 for detail of the control shaft). Locking shaft 31 can hereby be pushed through the openings in order to secure control shaft 31 relative to valve seat 11. In figure 4B can be seen that in this embodiment two openings 29 are arranged opposite each other relative to control shaft 13 so that locking shaft 31 can pass through control shaft 13 and engage at two locations on wall 30. Through-opening 28 in control shaft 13 is provided with a tapering guide surface 28', whereby locking shaft 31 can be inserted more easily. Controller housing 4 is provided with at least one hole 32 through which locking shaft 31 is insertable and removable. Hole 32 is for this purpose aligned with openings 28, 29 in control shaft 13 and wall 30 when valve assembly 10 is connected to controller housing 4. In this example controller housing 4 has two holes 32 on either side of the housing. Locking shaft 31 can hereby be slid through one of the holes 32 by being pushed through second hole 32 with a tool.

Locking shaft 31 is shown in more detail in figure 6. Locking shaft 31 has in this example a first segment 33 and a second segment 34 of differing cross-section. The cross-section of second segment 34 substantially corresponds to opening 28 in control shaft 13. Locking shaft 31 hereby fits clampingly to some extent in opening 28 of control shaft 13. Second segment 34 extends from a free end of locking shaft 31 to a point beyond half the length of locking shaft 31. First segment 33 extends over the rest of the length of locking shaft 31. The cross-section of first segment 33 is smaller than that of second segment 34. Locking shaft 31 can hereby be pushed over a relatively great part of its length, i.e. this part of first segment 33, relatively easily and/or with little or no friction through opening 28 of control shaft 13. An end zone 37 of the first segment is provided with an external screw thread with which locking shaft 31 can be screwed into an opening 29 in wall 30. In practice a first opening 29 in wall 30 therefore has a diameter corresponding to the diameter of end zone 37 of locking shaft 31, and this same opening is provided with an internal screw thread. The other opening 28 lying opposite the first opening 29 has a diameter corresponding to that of second segment 34 of locking shaft 31 so that locking shaft 31 can be inserted from this opening 29 through control shaft 13 and then screwed into the opposite wall 30. In addition, locking shaft 31 provides the advantage that control shaft 13 is secured against rotation about its longitudinal axis relative to wall 30. Such a rotation could occur during the releasable connection of membrane 14 to control shaft 13, for instance by tightening the nut 23. As a result of said rotation the rolling membrane 19 could fold, ripple, crease or be damaged, whereby it can roll less smoothly. Movement of control shaft 13 relative to valve seat 11, which could cause an irregular and/or sudden increase in the effective throughflow opening between inlet opening 2 and outlet opening 3, is hereby countered during use of the gas pressure controller. The gas pressure at the outlet opening would hereby be less easily or uniformly controllable.

The shown gas pressure controller 1 can be assembled according to the invention by first providing controller housing 4. Valve assembly 10, in which locking shaft 31 connects control shaft 13 to wall 30, can then be inserted into controller housing 4 and connected releasably thereto by means of flange 26 and threaded ends 27. First shell 20 of membrane housing 8 is releasably attached to the controller housing at the same time using flange 26 and threaded ends 27. Membrane 14 is subsequently connected releasably to control shaft 13 by means of nut 23. Membrane housing 8 is finally closed by connecting second shell 21 to first shell 20 by means of bolts 22. As final step locking shaft 31 is pushed out of gas pressure controller 1 through openings 28, 29 in control shaft 13 and wall 30 and holes 32 in controller housing 4. Control shaft 13, and so closing mechanism 12, can hereby move relative to valve seat 11, whereby the valve can operate. Controller housing 4 optionally has a bottom cover 35 which can be temporarily removed so that spring 36 is left clear before insertion of valve assembly 10 into controller housing 4. Valve assembly 10 need not hereby be inserted counter to the spring pressure of spring 36.

In order to replace or exchange a valve assembly 10 a locking shaft 31 can first be arranged through holes 32 in controller housing 4 in order to secure control shaft 13 relative to valve seat 11. Valve assembly 10 can then be released by at least partially releasing membrane housing 8 and releasing membrane 14. A new or other valve assembly 10 also having a locking shaft 31 therein can then be arranged as specified above.

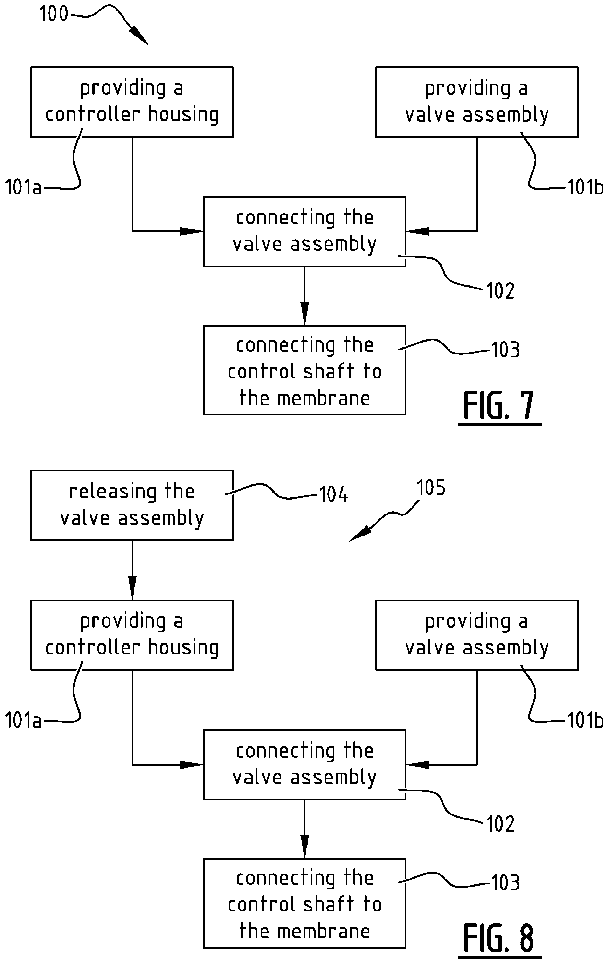

Figure 7 shows a flow diagram of a method 100 for assembling a gas pressure controller. According to the invention the method comprises a first step 101a of providing a controller housing 4 having an inflow opening 2 and an outflow opening 3, and a step 101b of providing a valve assembly with the above specified features. These steps are followed by a second step 102 of releasably connecting a valve assembly 10 between inflow and outflow openings 2, 3. The method further comprises a step 103 of connecting control shaft 13 releasably to a membrane 14. Membrane 14 further opens and/or closes valve assembly 10 as above via control shaft 13. Controller housing 4 is then closed, optionally with membrane housing 8, or made ready for use in any suitable manner. In this specific example step 102 takes place by inserting valve assembly 10 at least partially through an opening in controller housing 4 intended for the purpose, and valve assembly 10 is partially inserted into membrane housing 8 through an opening for passage of valve assembly 10. The other of closing mechanism 11 and valve seat 12 is in this case connected releasably to control shaft 13 before step 102, i.e. connection takes place outside controller housing 4. The connection of the other of closing mechanism 11 and valve seat 12 to control shaft 13 is optionally released after step 103, i.e. after valve assembly 10 has been placed in controller housing 4.

Figure 8 shows a flow diagram 105 for replacing a valve assembly 10 in a gas pressure controller. A gas pressure controller 1 can first of all be provided for this purpose, after which in step 104 the valve assembly 10 is released from controller housing 4, and for which purpose membrane 14 and at least a part of membrane housing 8 are optionally released from controller housing 4. When steps 101a, 101b, 102 and 103 are then performed, this method can be used by means of the optional step 104 to replace a valve assembly 10, for instance with a smaller valve diameter d', in a gas pressure controller 1 by an assembly with a larger valve diameter d.

The invention is not limited to the embodiments specified above or shown in the figures, but also extends to that defined in the claims which now follow.

## Claims

1. Gas pressure controller, comprising:
- a controller housing with an inflow opening and an outflow opening;
- a membrane;
- a valve assembly placed between the inflow opening and the outflow opening and comprising:
- a valve seat and a closing mechanism movable relative thereto for adjusting and/or closing an effective throughflow opening from the inflow opening to the outflow opening; and
- a control shaft which is connected to one of the closing mechanism and the valve seat and which connects the one of the closing mechanism and the valve seat to the membrane,
wherein the membrane is configured to further open and/or close the valve via the control shaft subject to the gas pressure on the membrane,
**characterized in that** the valve assembly is releasably connectable as a whole without releasing the components of the valve assembly from each other to the controller housing and the membrane.

2. Gas pressure controller according to claim 1, wherein the valve assembly can be inserted at least partially into the controller housing through an opening intended for the purpose in the controller housing.

3. Gas pressure controller according to any one of the foregoing claims, wherein the membrane is placed in a membrane housing, and the membrane housing comprises at least one opening for passage of the valve assembly,
wherein preferably the membrane and the membrane housing are connectable in at least partially releasable manner to the controller housing in order to leave the opening in the membrane housing clear for passage of the valve assembly.

4. Gas pressure controller according to any one of the foregoing claims, wherein the control shaft and the other of the closing mechanism and the valve seat are provided with mutually co-acting connecting members which are releasable from each other for releasably connecting the control shaft and the other of the closing mechanism and the valve seat to each other.

5. Gas pressure controller according to claim 4, wherein the mutually co-acting connecting members are formed by:
- engaging openings in the control shaft and at least one wall which is connected to the other of the closing mechanism and the valve seat and which extends along the control shaft from the other of the closing mechanism and the valve seat; and
- a locking shaft which is releasably arrangeable in the engaging openings to connect the control shaft and the other of the closing mechanism and the valve seat releasably to each other,
wherein preferably the engaging openings are formed by through-holes into which the locking shaft is slidable and/or screwable.

6. Gas pressure controller according to claim 5, wherein the at least one wall is provided with two engaging openings lying opposite each other relative to the control shaft.

7. Gas pressure controller according to claim 5, wherein the controller housing comprises at least one hole through which the locking shaft is at least partially removable in order to release the connecting members when the valve assembly is connected to the controller housing.

8. Gas pressure controller according to any one of the claims 5 - 7, wherein the locking shaft has in its length direction a first segment with a first cross-section and a second segment with a second cross-section, wherein the dimensions of the cross-section of the second segment correspond to the engaging opening in the control shaft and the dimensions of the cross-section of the first segment are smaller than the dimensions of the cross-section of the second segment.

9. Gas pressure controller according to any one of the foregoing claims, wherein the control shaft is connected to the closing mechanism,
wherein preferably the valve assembly further comprises a piston which is connected to the control shaft and which, when the valve assembly is connected to the controller housing, is situated on the other side of the inflow opening than the closing mechanism, and/or
wherein the piston is connected to the valve seat for movement via a rolling membrane relative to the valve seat.

10. Gas pressure controller according to any one of the claims 2-9, wherein the valve seat has a first internal valve diameter and the valve assembly has an external diameter corresponding to a diameter of the opening in the controller housing, and wherein a second valve assembly is further provided as replacement for the valve assembly, wherein the external diameter of the second valve assembly also corresponds to the diameter of the opening in the controller housing and wherein the second valve assembly comprises a valve seat with a second internal valve diameter which differs from the first internal valve diameter.

11. Valve assembly suitable and intended for use in a gas pressure controller according to any one of the foregoing claims.

12. Method for assembling a gas pressure controller, for instance according to any one of the foregoing claims, comprising the steps of:
a) providing a controller housing having an inflow opening and an outflow opening;
b) installing a valve assembly as a whole and without releasing the components of the valve assembly from each other releasably between the inflow opening and the outflow opening, which valve assembly comprises:
- a valve seat and a closing mechanism movable relative thereto for adjusting and/or closing an effective throughflow opening from the inflow opening to the outflow opening; and
- a control shaft connected to one of the closing mechanism and the valve seat; and
c) connecting the control shaft releasably to a membrane,
wherein the membrane further opens and/or closes the valve assembly via the control shaft subject to the gas pressure on the membrane.

13. Method according to claim 12, wherein step b) takes place by inserting the valve assembly at least partially through an opening intended therefor into the controller housing,
wherein preferably the valve assembly is inserted into the membrane housing at least partially through an opening for passage of the valve assembly.

14. Method according to any one of the claims 12 - 13, wherein the other of the closing mechanism and the valve seat is releasably connected to the control shaft prior to step b), and optionally released after step c).

15. Method for replacing a valve assembly in a gas pressure controller according to claim 10, comprising the steps of:
d) releasing the valve assembly from the controller housing, and optionally releasing the membrane and at least a part of the membrane housing from the controller housing; and
e) assembling as according to any one of the claims 12 - 14 the gas pressure controller with the second valve assembly.

## Patentansprüche

1. Gasdruckregler, aufweisend:
- ein Reglergehäuse mit einer Einlassöffnung und einer Auslassöffnung;
- eine Membran;
- eine zwischen der Einlassöffnung und der Auslassöffnung angeordnete Ventilbaugruppe, welche aufweist:
- einen Ventilsitz und einen relativ dazu beweglichen Schließmechanismus zum Einstellen und/oder Schließen einer effektiven Durchflussöffnung zwischen Einlassöffnung und Auslassöffnung;
und
- einen Regelschaft, der entweder mit dem Schließmechanismus oder dem Ventilsitz verbunden ist, und der entweder den Schließmechanismus oder den Ventilsitz mit der Membran verbindet, wobei die Membran ferner so ausgebildet ist, dass sie das Ventil über den Regelschaft in Abhängigkeit von dem auf die Membran ausgeübten Gasdruck öffnet und/oder schließt,
**dadurch gekennzeichnet, dass** die Ventilbaugruppe als Ganzes mit dem Steuergehäuse und der Membran lösbar verbindbar ist, ohne dass die Komponenten der Ventilbaugruppe voneinander getrennt werden müssen.

2. Gasdruckregler nach Anspruch 1, wobei die Ventilbaugruppe über eine dafür vorgesehene Öffnung im Reglergehäuse zumindest teilweise in das Reglergehäuse eingesetzt werden kann.

3. Gasdruckregler nach einem der vorherigen Ansprüche, wobei die Membran in einem Membrangehäuse angeordnet ist und das Membrangehäuse mindestens eine Öffnung für die Durchführung der Ventilbaugruppe aufweist,
wobei vorzugsweise die Membran und das Membrangehäuse zumindest teilweise lösbar mit dem Reglergehäuse verbindbar sind, um die Öffnung im Membrangehäuse für die Durchführung der Ventilbaugruppe freizuhalten.

4. Gasdruckregler nach einem der vorherigen Ansprüche, wobei der Regelschaft und der andere der beiden Mechanismen, Schließmechanismus beziehungsweise Ventilsitz, mit miteinander zusammenwirkenden voneinander lösbaren Verbindungselementen versehen sind, um den Regelschaft und den anderen der beiden Mechanismen, Schließmechanismus und Ventilsitz, lösbar miteinander zu verbinden.

5. Gasdruckregler nach Anspruch 4, wobei die miteinander zusammenwirkenden Verbindungselemente durch folgende Elemente gebildet werden:
- Eingriffsöffnungen in dem Regelschaft und mindestens eine Wandung, die mit dem anderen der beiden Mechanismen, Schließmechanismus beziehungsweise Ventilsitz, verbunden ist, und die sich entlang dem Regelschaft von dem anderen der beiden Mechanismen, Schließmechanismus beziehungsweise Ventilsitz, aus erstreckt; und
- einen Verriegelungsstift, der lösbar in den Eingriffsöffnungen angeordnet werden kann, um den Regelschaft und den anderen der beiden Mechanismen, Schließmechanismus beziehungsweise Ventilsitz, lösbar miteinander zu verbinden, wobei die Eingriffsöffnungen vorzugsweise durch Durchgangslöcher gebildet sind, in die der Verriegelungsstift eingeschoben und/oder eingeschraubt werden kann.

6. Gasdruckregler nach Anspruch 5, wobei die mindestens eine Wandung in Bezug auf den Regelschaft mit zwei sich gegenüberliegenden Eingriffsöffnungen versehen ist.

7. Gasdruckregler nach Anspruch 5, wobei das Reglergehäuse mindestens ein Loch aufweist, durch das der Verriegelungsstift zumindest teilweise entfernbar ist, um die Verbindungselemente voneinander zu trennen, wenn die Ventilbaugruppe mit dem Reglergehäuse verbunden ist.

8. Gasdruckregler nach einem der Ansprüche 5 bis 7, wobei der Verriegelungsstift in seiner Längsrichtung ein erstes Segment mit einem ersten Querschnitt und ein zweites Segment mit einem zweiten Querschnitt aufweist, wobei die Abmessungen des Querschnitts des zweiten Segments der Eingriffsöffnung in dem Regelschaft entsprechen und die Abmessungen des Querschnitts des ersten Segments kleiner sind als die Abmessungen des Querschnitts des zweiten Segments.

9. Gasdruckregler nach einem der vorherigen Ansprüche, wobei der Regelschaft mit dem Schließmechanismus verbunden ist,
wobei vorzugsweise die Ventilbaugruppe ferner einen mit dem Regelschaft verbundenen Kolben aufweist, der sich bei mit dem Reglergehäuse verbundener Ventilbaugruppe auf der anderen Seite der Einlassöffnung befindet als der Schließmechanismus, und/oder
wobei der Kolben mit dem Ventilsitz über eine Rollmembran beweglich verbunden ist.

10. Gasdruckregler nach einem der Ansprüche 2 bis 9, wobei der Ventilsitz einen ersten Ventil-Innendurchmesser und die Ventilbaugruppe einen Außendurchmesser aufweist, der einem Durchmesser der Öffnung im Reglergehäuse entspricht, und wobei ferner eine zweite Ventilbaugruppe als Ersatz für die Ventilbaugruppe vorgesehen ist, wobei der Außendurchmesser der zweiten Ventilbaugruppe ebenfalls dem Durchmesser der Öffnung im Reglergehäuse entspricht, und wobei die zweite Ventilbaugruppe einen Ventilsitz mit einem zweiten Ventil-Innendurchmesser aufweist, der sich von dem ersten Ventil-Innendurchmesser unterscheidet.

11. Ventilbaugruppe, die für die Verwendung in einem Gasdruckregler nach einem der vorherigen Ansprüche geeignet und bestimmt ist.

12. Verfahren zum Zusammenbau eines Gasdruckreglers, beispielsweise nach einem der vorherigen Ansprüche, aufweisend die folgenden Schritte:
a) Bereitstellen eines Reglergehäuses mit einer Einlassöffnung und einer Auslassöffnung;
b) Einbauen einer Ventilbaugruppe als Ganzes zwischen der Einlassöffnung und der Auslassöffnung ohne die Komponenten der Ventilbaugruppe voneinander zu trennen, wobei die Ventilbaugruppe aufweist:
- einen Ventilsitz und einen relativ dazu beweglichen Schließmechanismus zum Einstellen und/oder Schließen einer effektiven Durchflussöffnung zwischen der Einlassöffnung und der Auslassöffnung; und
- einen Regelschaft, der entweder mit dem Schließmechanismus oder dem Ventilsitz verbunden ist; sowie
c) lösbares Verbinden des Regelschaftes mit einer Membran,
wobei die Membran ferner die Ventilbaugruppe über den Regelschaft in Abhängigkeit von dem auf die Membran ausgeübten Gasdruck öffnet und/oder schließt.

13. Verfahren nach Anspruch 12, wobei Schritt b) durch zumindest teilweises Einsetzen der Ventilbaugruppe in eine dafür vorgesehene Öffnung des Reglergehäuses erfolgt,
wobei vorzugsweise die Ventilbaugruppe durch eine Öffnung zur Durchführung der Ventilbaugruppe zumindest teilweise in das Membrangehäuse eingesetzt wird.

14. Verfahren nach einem der Ansprüche 12 bis 13, wobei der andere der beiden Mechanismen, Schließmechanismus beziehungsweise Ventilsitz, vor Schritt b) lösbar mit dem Regelschaft verbunden und optional nach Schritt c) entfernt wird.

15. Verfahren zum Auswechseln einer Ventilbaugruppe in einem Gasdruckregler nach Anspruch 10, welches die folgenden Schritte aufweist:
d) Entnehmen der Ventilbaugruppe aus dem Reglergehäuse und optional Entfernen der Membran und zumindest eines Teils des Membrangehäuses aus dem Reglergehäuse; und
e) Zusammenbauen des Gasdruckreglers mit der zweiten Ventilbaugruppe nach einem der Ansprüche 12 bis 14.

## Revendications

1. Régulateur de pression de gaz, comprenant:
- un boîtier de régulateur avec une ouverture d'entrée et une ouverture de sortie;
- une membrane;
- un ensemble de vanne placé entre l'ouverture d'entrée et l'ouverture de sortie et comprenant:
- un siège de vanne et un mécanisme de fermeture pouvant se déplacer par rapport à ce dernier afin d'ajuster et/ou de fermer une ouverture efficace de passage à partir de l'ouverture d'entrée vers l'ouverture de sortie; et
- un arbre de commande qui est relié à l'un du mécanisme de fermeture et du siège de vanne et qui relie ce dernier du mécanisme de fermeture et du siège de vanne à la membrane,
dans lequel la membrane est, en outre, configurée de manière à ouvrir et/ou fermer la vanne par l'intermédiaire de l'arbre de commande soumis à la pression de gaz sur la membrane,
**caractérisé en ce que** l'ensemble de vanne peut être raccordé de manière amovible comme un ensemble sans libérer les composants de l'ensemble de vanne l'un de l'autre par rapport au boîtier de régulateur et à la membrane.

2. Régulateur de pression de gaz selon la revendication 1, dans lequel l'ensemble de vanne peut être inséré au moins partiellement dans le boîtier de régulateur à travers une ouverture prévue à cet effet dans le boîtier du contrôleur.

3. Régulateur de pression de gaz selon l'une quelconque des revendications précédentes, dans lequel la membrane est placée dans un logement de membrane, et le logement de membrane comprend au moins une ouverture pour le passage de l'ensemble de vanne,
dans lequel, de préférence, la membrane et le logement de membrane peuvent être raccordés d'une manière au moins partiellement amovible au boîtier de régulateur dans le but de laisser l'ouverture dans le logement de membrane libre afin d'assurer le passage de l'ensemble de vanne.

4. Régulateur de pression de gaz selon l'une quelconque des revendications précédentes, dans lequel l'arbre de commande et l'autre du mécanisme de fermeture et du siège de vanne comportent des éléments de liaison coopérants qui peuvent être séparés l'un de l'autre afin de coupler de manière amovible l'arbre de commande et l'autre du mécanisme de fermeture et du siège de vanne entre eux.

5. Régulateur de pression de gaz selon la revendication 4, dans lequel les éléments de liaison coopérants sont formés par:
- des ouvertures de couplage sur l'arbre de commande et au moins une paroi qui est couplée à l'autre du mécanisme de fermeture et du siège de vanne et qui s'étend le long de l'arbre de commande de l'autre du mécanisme de fermeture et du siège de vanne; et
- un arbre de verrouillage qui peut être agencé de manière amovible dans les ouvertures de couplage afin de coupler l'arbre de commande et l'autre du mécanisme et du siège de vanne de manière amovible entre eux,
dans lequel, de préférence, les ouvertures de couplage sont formées par des orifices traversants dans lesquels l'arbre de verrouillage peut être glissé et/ou vissé.

6. Régulateur de pression de gaz selon la revendication 5, dans lequel la au moins une paroi comporte deux ouvertures de couplage situées à l'opposé l'une de l'autre par rapport à l'arbre de commande.

7. Régulateur de pression de gaz selon la revendication 5, dans lequel le boîtier de régulateur comprend au moins un orifice à travers lequel l'arbre de verrouillage est au moins partiellement démontable afin de libérer les éléments de liaison lorsque l'ensemble de vanne est couplé au boîtier de régulateur.

8. Régulateur de pression de gaz selon l'une quelconque des revendications 5 à 7, dans lequel l'arbre de verrouillage présente, dans sa direction longitudinale un premier segment avec une première section transversale et un second segment avec une seconde section transversale, dans lequel les dimensions de la section transversale du second segment correspondent à l'ouverture de couplage sur l'arbre de commande et les dimensions de la section transversale du premier segment sont inférieures aux dimensions de la section transversale du second segment.

9. Régulateur de pression de gaz selon l'une quelconque des revendications précédentes, dans lequel l'arbre de commande est couplé au mécanisme de fermeture,
dans lequel, de préférence, l'ensemble de vanne comprend, en outre, un piston qui est couplé à l'arbre de commande et qui, lorsque l'ensemble de vanne est couplé au boîtier de régulateur, est situé de l'autre côté de l'ouverture d'entrée par rapport au mécanisme de fermeture, et/ou
dans lequel le piston est couplé au siège de vanne afin de se déplacer, par l'intermédiaire d'une membrane roulante, par rapport au siège de vanne.

10. Régulateur de pression de gaz selon l'une quelconque des revendications 2 à 9, dans lequel le siège de vanne présente un premier diamètre interne de vanne et l'ensemble de vanne présente un diamètre externe correspondant à un diamètre de l'ouverture sur le boîtier de régulateur, et dans lequel un second ensemble de vanne est, en outre, fourni comme rechange pour l'ensemble de vanne, dans lequel le diamètre externe du second ensemble de vanne correspond aussi au diamètre de l'ouverture sur le boîtier de régulateur et dans lequel le second ensemble de vanne comprend un siège de vanne avec un second diamètre interne de vanne qui diffère du premier diamètre interne de vanne.

11. Ensemble de vanne approprié et destiné à une utilisation dans un régulateur de pression de gaz selon l'une quelconque des revendications précédentes.

12. Procédé d'assemblage d'un régulateur de pression de gaz, par exemple, selon l'une quelconque des revendications précédentes, comprenant les étapes de:
a) fourniture d'un boîtier de régulateur présentant une ouverture d'entrée et une ouverture de sortie;
b) installation d'un ensemble de vanne en une seule pièce et sans libérer les composants de l'ensemble de vanne l'un par rapport à l'autre de manière amovible entre l'ouverture d'entrée et l'ouverture de sortie, lequel ensemble de vanne comprend:
- un siège de vanne et un mécanisme de fermeture pouvant se déplacer par rapport à ce dernier afin de régler et/ou de fermer une ouverture de passage efficace à partir de l'ouverture d'entrée vers l'ouverture de sortie; et
- un arbre de commande couplé à l'un du mécanisme de fermeture et du siège de vanne ; et
c) couplage de l'arbre de commande de manière amovible à une membrane,
dans lequel, en outre, la membrane ouvre et/ou ferme l'ensemble de vanne par l'intermédiaire de l'arbre de commande soumis à la pression de gaz sur la membrane.

13. Procédé selon la revendication 12, dans lequel l'étape b) est réalisée en insérant au moins partiellement l'ensemble de vanne à travers une ouverture destinée à cela dans le boîtier de régulateur,
dans lequel, de préférence, l'ensemble de vanne est inséré au moins partiellement dans le logement de membrane à travers une ouverture destinée à assurer le passage de l'ensemble de vanne.

14. Procédé selon l'une quelconque des revendications 12 ou 13, dans lequel l'autre du mécanisme de fermeture et du siège de vanne est couplé de manière amovible à l'arbre de commande avant l'étape b) et, en variante, libéré après l'étape c).

15. Procédé de remplacement d'un ensemble de vanne sur un régulateur de pression de gaz selon la revendication 10, comprenant les étapes de:
d) libération de l'ensemble de vanne du boîtier de régulateur et, en variante, libération de la membrane et d'au moins une partie du logement de membrane par rapport au boîtier de régulateur; et
e) assemblage selon l'une quelconque des revendications 12 à 14 du régulateur de pression de gaz avec le second ensemble de vanne.
